(19) Europäisches Patentamt
European Patent Office
Office européen des brevets

(11) **EP 4 507 204 A1**

(12) **EUROPEAN PATENT APPLICATION**

(43) Date of publication:
**12.02.2025 Bulletin 2025/07**

(21) Application number: **23306368.4**

(22) Date of filing: **11.08.2023**

(51) International Patent Classification (IPC):
***H04B 1/00*** *(2006.01)*

(52) Cooperative Patent Classification (CPC):
**H04B 1/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Commissariat à l'Energie Atomique et aux Energies Alternatives**
**75015 Paris (FR)**

(72) Inventors:
• **COUROUVE, Pierre**
  **38054 GRENOBLE CEDEX 09 (FR)**
• **ALSHAKOUSH, Ali**
  **38054 GRENOBLE CEDEX 09 (FR)**

(74) Representative: **Brevalex**
**Tour Trinity**
**1 B Place de la Défense**
**92400 Courbevoie (FR)**

(54) **SYSTEM FOR THE SELECTION OF AT LEAST ONE FREQUENCY CHANNEL IN AN INPUT SIGNAL, CORRESPONDING RECEIVER AND INTEGRATED CIRCUIT**

(57)   A system is proposed for the selection of at least one frequency channel in an input signal. Such system comprises:
- a gain block (110) delivering H currents proportional to the input signal through a gain factor;
- N processing paths (220) for processing the currents; and
    Each path comprises:
- one capacitor; and
- H branches, each branch being configured for providing to the capacitor a respective current, the H branches being configured for having the gain factors of the currents successively provided to the capacitor over a period $T_{LO}$ that are representative of a respective sampled waveform which is the H first samples of a circular permutation of a sampled pattern obtained by time shift by a multiple of a sampling period $T_{LO}/N$. Each path comprises a reset switch, implemented in parallel of the capacitor, for resetting the voltage across the capacitor once per period $T_{LO}$.

Figure 2

EP 4 507 204 A1

**Description**

## 1. FIELD OF THE DISCLOSURE

The field of the disclosure is that of the processing of a signal received by a receiver device.

More specifically, the disclosure relates to a system for the selection of one (or more) frequency channel(s) in such signal.

The disclosure can be of interest in any field wherein the selection of one (or more) frequency channel(s) in a received signal is of interest. This can be the case e.g. in the field of receivers for radars, for sonars, or for wireless communications, e.g. receivers for 5G, 3GPP LTE Pro, LiFi, and "Beyond 5G" standards), LAN (for "Local Area Network"), Home-area networks, etc.

## 2. TECHNOLOGICAL BACKGROUND

This document describes an existing problem in the field of wireless communications and with which the inventors of the present patent application have been confronted. The invention is of course not limited to this particular field of application, but is of interest in any field wherein the selection of one (or more) frequency channel(s) in a signal received by a receiver device is of interest.

The increasing number of connected devices in mobile and wireless applications leads to the allocation of new frequencies in the RF spectrum and to new standards. In the context of 5G which aims to aggregate several standards to improve the data rate, the need for multi-standard receivers is increased. The use of multiple parallel receivers where each one is dedicated to one specific application consumes much power and takes a large area.

Another solution is the use of a single receiver with one data processor that can cover a large number of frequencies. Such system requires wideband devices at the circuit level: wide band Low-Noise Amplifiers, wideband mixers and wideband local oscillators that cover almost a decade in order to cover the most important RF standards, e.g: Bluetooth, Zigbee, GSM, Wifi, etc. However, wideband receivers are sensitive to blockers and must be highly linear.

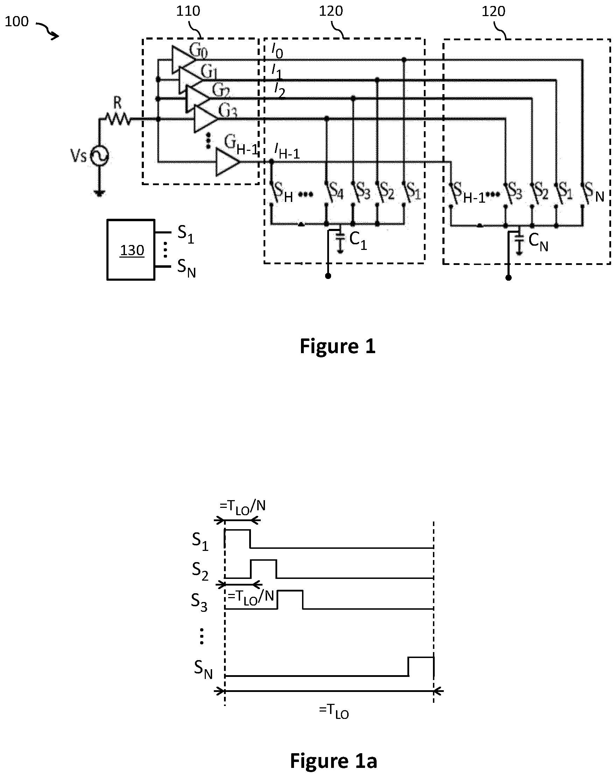

To mitigate this issue, agile circuits are preferred. In that context, harmonic rejection N-path filters, HR-NPF, or harmonic rejection N-path mixers, HR-NPM, seem suitable. For instance, the article from AL Shakoush, A. & Lauga-Larroze, Estelle & Subias, S. & Taris, T. & Podevin, Florence & Bourdel, S. "Low Complexity Architecture of N-Path Mixers for Low Power Application" 17th IEEE International New Circuits and Systems Conference (NEWCAS), 2019, describes such HR-NPM which is also illustrated in **Figure 1** and **Figure 1a.**

More particularly, in Figure 1 the receiving antenna is represented through its equivalent electrical circuit comprising the voltage source $V_s$ and the internal resistor R that thus delivers a current proportional to the received input signal. Accordingly, the HR-NPM 100 comprises:

- a gain block 110 delivering H currents, $I_0, I_1, ..., I_{H-1}$, substantially proportional to the input signal through a respective gain factor, $G_0, G_1, ..., G_{H-1}$, with H an integer greater than or equal to three;
- N processing paths 120, with N an integer greater than or equal to H, for processing the H currents; and
- a clock system 130 delivering N non-overlapping periodic clocks, $S_1, S_2, ..., S_N$, hereafter sampling clocks, shifted by a duration substantially equal to $T_{LO}/N$ in relation to each other, with $T_{LO}$ the period of the sampling clocks. A ON state of the sampling clocks is substantially equal to $T_{LO}/N$.

In the present document the ON state of a clock corresponds to the state that turns ON the switch that is trigged by the clock in question. For instance, the ON state of a clock that trigs a NMOS type transistor is the high voltage level of the clock. Conversely, the ON state of a clock that trigs a PMOS type transistor is the low voltage level of the clock.

Back to Figure 1 and Figure 1a, each path 120 comprises:

- a load capacitor $C_1$ or $C_2$ or ... or $C_N$; and
- H branches, each branch being configured for providing to the capacitor $C_1$ or $C_2$ or ... or $C_N$, through a respective switch triggered by a respective sampling clock $S_1$ or $S_2$ or ... or $S_N$, a respective current $I_0$ or $I_1$ or ... or $I_{H-1}$. The H branches are configured for having the gain factors $G_0, G_1, ..., G_{H-1}$, of the currents successively provided to the capacitor over a period $T_{LO}$ that are representative of a respective sampled waveform.

More particularly, such HR-NPM 100 filters the spectrum of the input signal and further translates in frequency such spectrum by an amount equal to $1/T_{LO}$. For that, the N respective sampled waveforms associated to the N paths are the H first samples (or, equivalently, the H successive samples starting from a same given sample index (i.e. the H successive samples starting from the first sample, or from the second sample, or from the third sample, etc.) as it leads to the same set of N sampled waveforms in any case) of the N circular permutations of a sampled pattern obtained by N successive time shifts of a sampling period $T_{LO}/N$. The sampled pattern is chosen so as to minimize the level of the harmonics at multiples of the frequency $1/T_{LO}$ (i.e. at the frequencies $2/T_{LO}, 3/T_{LO}, ..., (N-2)/T_{LO}$) and needs to correspond to a periodic function of period $T_{LO}$. In practice, the sampled pattern corresponds to samples of a sinewave of period $T_{LO}$ as given by equation (2) in the above-mentioned article. We thus observe that the center frequency provided by such filtering is not flexible, at least independently of the tuning of the sampling clocks frequency $1/T_{LO}$. Furthermore, the transfer function does not provide flexibility in its shape so that no more than one frequency channel can be selected simultaneously.

There is thus a need for a system that allows the selection of one (or more) frequency channel(s) in a signal in a flexible way.

### 3. SUMMARY

A particular aspect of the present disclosure relates to a system for the selection of at least one frequency channel in an input signal. Such system comprises:

- a gain block delivering H currents substantially proportional to the input signal through a respective gain factor, H an integer greater than or equal to three;
- N processing paths, N an integer greater than or equal to H, for processing said currents; and
- a clock system delivering N non-overlapping periodic clocks, hereafter sampling clocks, shifted by a duration substantially equal to $T_{LO}/N$ in relation to each other, with $T_{LO}$ the period of the sampling clocks, a ON state of the sampling clocks being substantially equal to $T_{LO}/N$.

Each path comprises:

- an output stage comprising at least one capacitor; and
- H branches, each branch being configured for providing to the at least one capacitor, through a respective switch triggered by a respective sampling clock among said N sampling clocks, a respective current among said H currents. The H branches are configured for having the gain factors of the currents successively provided to the at least one capacitor over a period $T_{LO}$ that are representative of a respective sampled waveform.

The N respective sampled waveforms associated to the N paths are H first samples (or, equivalently, the H successive samples starting from a same given sample index (i.e. the H successive samples starting from the first sample, or from the second sample, or from the third sample, etc.) as it leads to the same set of N sampled waveforms in any case) of the N circular permutations of a sampled pattern obtained by N successive time shifts of a sampling period $T_{LO}/N$. The output stage comprises at least one switch, hereafter reset switch, implemented in parallel of the at least one capacitor. The clock system delivers N clocks, hereafter reset clocks, each reset clock trigging a respective at least one reset switch for resetting the voltage across said at least one capacitor once per period $T_{LO}$.

Thus, the present disclosure proposes a new and inventive solution for selecting (e.g. through filtering and/or downmixing) one (or more) frequency channel(s) in a signal in a flexible way.

More particularly, the reset, at each period of the sampling clocks, of the voltage across the output capacitors of the N paths of a structure of the HR-NPF or HR-NPM type allows implementing a sampled pattern that does not need to be a periodic function of the sampling clocks period $T_{LO}$. This thus allows flexibility in the shape for the transfer function of the system. For instance, a transfer function exhibiting a bandpass behavior centered around the frequency channel(s) to be selected can be implemented.

In some embodiments, the sampled pattern corresponds to the sampling of a sinewave. A frequency of the sinewave is different from $1/T_{LO}$. The at least one frequency channel comprises a frequency channel centered on the frequency of the sinewave.

Thus, the transfer function of the system exhibits a bandpass behavior centered around the frequency channel corresponding to the frequency of the sinewave.

In some embodiments, the sampled pattern corresponds to the sampling of a sum of sinewaves. The at least one frequency channel comprises, for each sinewave, a frequency channel centered on the frequency of the sinewave.

Thus, the transfer function of the system exhibits a bandpass behavior centered around the frequency channels corresponding to the frequencies of the sinewaves. The selection (or aggregation) of the frequency channels corresponding to the frequencies of the sinewaves is thus obtained.

In some embodiments, the at least one capacitor comprises a first capacitor and a second capacitor. The at least one reset switch comprises:

- a first reset switch configured to ground the first capacitor for resetting the voltage across the first capacitor when the first reset switch is ON, and

- a second reset switch configured to ground the second capacitor for resetting the voltage across the second capacitor when the second reset switch is ON.

The output stage comprises at least one multiplexer configured for alternating between a first state and a second state, the change between the first state and the second state occurring at each sampling clock period $T_{LO}$. The output stage is configured for:

- when the at least one multiplexer is in the first state: having the currents provided by the H branches to a given capacitor among the first and second capacitors, while the voltage across the other one of the first and second capacitors is reset by a respective reset switch; and
- when the at least one multiplexer is in the second state: having the currents provided by the H branches to the other one of the first and second capacitors while the voltage across the given capacitor among the first and second capacitors is reset by the respective reset switch.

Thus, a capacitor is charged during the period $T_{LO}$ and then discharged during the next period. This decorrelation between charge and discharge relaxes the requirements in terms of timings. For instance, this avoids potential glitches in the clocks, as well as the loss of current that is necessarily not integrated into the capacitor during the reset duration when such reset occurs during the same $T_{LO}$ period than the charging of the capacitor.

In some embodiments, the at least one multiplexer comprises a first multiplexer and a second multiplexer. The output stage is configured for:

- when the first multiplexer and the second multiplexer are in the first state: having the currents provided by the H branches to a given capacitor among the first and second capacitors, while the voltage across the other one of the first and second capacitors is reset by a respective reset switch, an ungrounded terminal of the given capacitor being connected to an output of the output stage; and
- when the first multiplexer is in the second state: having the currents provided by the H branches to the other one of the first and second capacitors while the voltage across the given capacitor among the first and second capacitors is reset by the respective reset switch, an ungrounded terminal of the other one of the first and second capacitors being connected to the output of the output stage.

In some embodiments, the system comprises a reconstruction block comprising, for each path, a switch, hereafter output switch, configured to connect the output of the output stage to an output of the reconstruction block. The clock system delivers N non-overlapping periodic clocks, hereafter reconstruction clocks, shifted by a duration substantially equal to $T_{LO}/N$ in relation to each other, the period of the reconstruction clocks being $T_{LO}$, a duration of a ON state of the reconstruction clocks being substantially equal to $T_{LO}/N$. Each reconstruction clock trigs a respective output switch for having the output of the output stage provided to an output of the reconstruction block. The N output switches are trigged sequentially following a same ordering as the N sampled waveforms associated to the N paths when the sampled waveforms are ordered following the N successive time shifts of the sampling period $T_{LO}/N$.

Thus, the signal delivered at the output of the reconstruction block is up-converted back around the same center frequency as the input signal. The system thus behaves as a HR-NPF, but with the flexibility in the shape for the transfer function of the system.

In some embodiments, the reconstruction clocks and the sampling clocks are same clocks.

Thus, the implementation of the system is simpler.

Another aspect of the present disclosure relates to a receiver comprising a system for the selection of at least one frequency channel as discussed above (in any of the different embodiments discussed above).

Another aspect of the present disclosure relates to an integrated circuit comprising a receiver comprising a system for the selection of at least one frequency channel as discussed above (in any of the different embodiments discussed above).

## 4. LIST OF FIGURES

Other features and advantages of embodiments shall appear from the following description, given by way of indicative and non-exhaustive examples and from the appended drawings, of which:

- Figure 1, described above in relation with the section "Technological background", illustrates a HR-NPM according to a known technic;
- Figure 1a, described above in relation with the section "Technological background", illustrates the N sampling clocks used to trig the H branches of the N paths of the HR-NPM of Figure 1;
- Figure 2 illustrates a system for the selection of at least one frequency channel in an input signal according to one embodiment of the present disclosure;
- Figure 2a illustrates the N reset clocks used to trig the reset switches of the capacitors of the N paths of the system of Figure 2 according to one embodiment of the present disclosure;
- Figure 3 illustrates the theoretical transfer function for the system of Figure 2 when tuned for the selection of two frequency channels according to one embodiment of the present disclosure;
- Figure 3a illustrates the transfer function simulated for a physical implementation of the system of Figure 2 according to one embodiment of the present disclosure;
- Figure 4 illustrates the implementation of the output stage of the system of Figure 2 according to another embodiment of the present disclosure;
- Figure 5 illustrates a system for the selection of at least one frequency channel in an input signal according to another embodiment of the present disclosure;
- Figure 5a illustrates the N reconstruction clocks used to trig the reconstruction switches of the system of Figure 5 according to one embodiment of the present disclosure; and
- Figure 6 illustrates a receiver comprising the system for the selection of at least one frequency channel of Figure 2 according to one embodiment of the present disclosure.

## 5. DETAILED DESCRIPTION

In all of the Figures of the present document, the same numerical reference signs designate similar elements and steps.

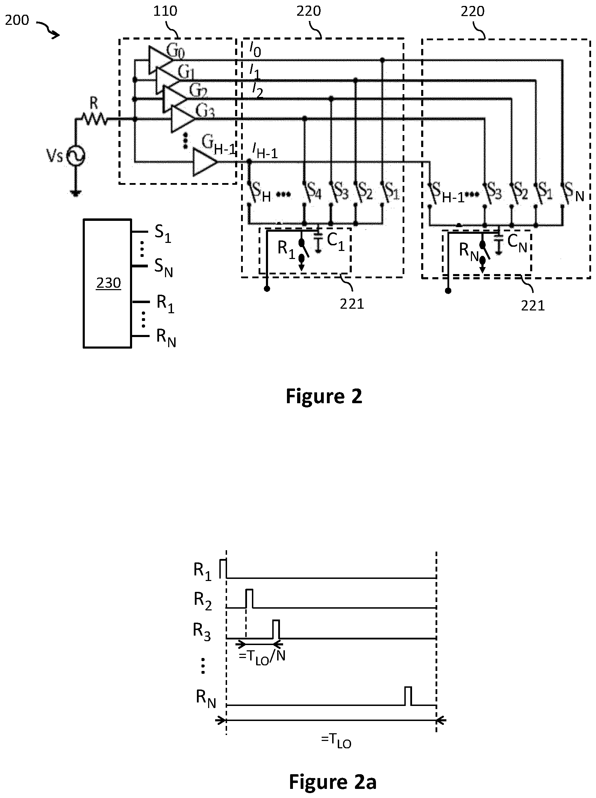

Referring now to **Figure 2** and **Figure 2a,** we describe a system 200 for the selection of at least one frequency channel in an input signal according to one embodiment of the present disclosure.

Compared to the HR-NPM of Figure 1, each of the N processing paths 220 of the system 200 comprises an output stage 221 comprising:

- the load capacitor $C_1$ or $C_2$ or ... or $C_N$, and
- one switch, hereafter reset switch, implemented in parallel of the load capacitor $C_1$ or $C_2$ or ... or $C_N$.

The output of the output stage 221 delivers the voltage present across the respective load capacitor $C_1$ or $C_2$ or ... or $C_N$. In other words, the output of the output stage 221 is connected to the ungrounded terminal of the respective load capacitor $C_1$ or $C_2$ or ... or $C_N$.

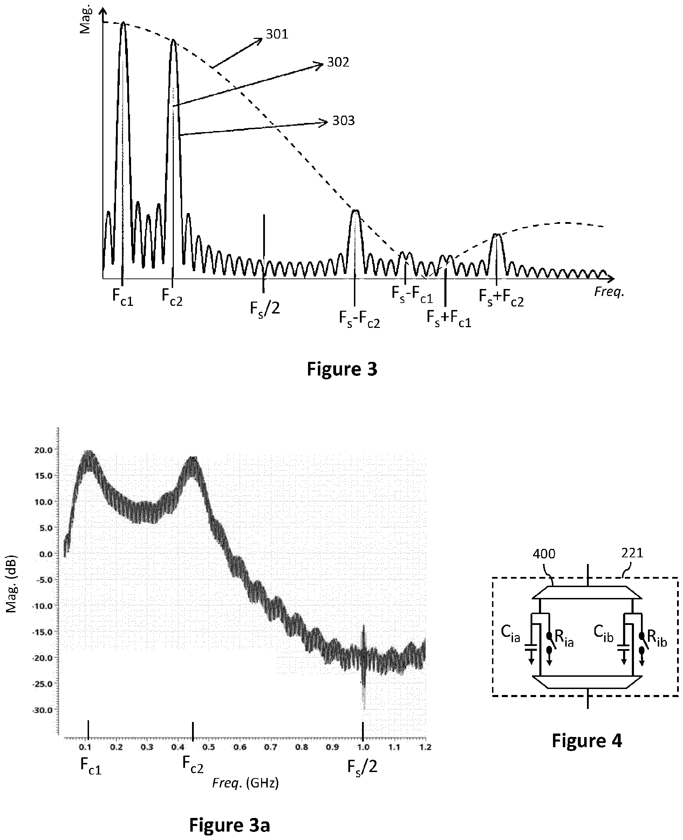

In some embodiments, each output stage 221 comprises more than one load capacitor $C_1$ or $C_2$ or ... or $C_N$, e.g. as in the embodiment of Figure 4 discussed below. In the same way, in some embodiments, each output stage 221 comprises more than one reset switch, e.g. put in parallel of different load capacitors as in the embodiment of Figure 4 discussed below.

Back to Figure 2 and Figure 2a, the clock system 230 of the system 200 delivers, in addition to the N sampling clocks $S_1$, $S_2$, ..., $S_N$, N clocks $R_1$, $R_2$, ..., $R_N$, hereafter reset clocks. Each reset clock trigs a respective reset switch for resetting the voltage across the capacitor $C_1$ or $C_2$ or ... or $C_N$ once per period $T_{LO}$.

More particularly, the reset, at each period $T_{LO}$ of the sampling clocks, of the voltage across the output capacitors $C_1$, $C_2$, ..., $C_N$ of the N paths allows implementing a sampled pattern that does not need to be a periodic function of the sampling clock period $T_{LO}$. This provides flexibility in the shape for the transfer function of the system 200. For instance, a transfer function exhibiting a bandpass behavior centered around the frequency channel(s) to be selected can be implemented.

For instance, in some embodiments, the sampled pattern corresponds to the sampling of a sinewave. However, contrary to what is encountered according to the know technics, the frequency $F_c$ of the sinewave can be different from $F_{LO}=1/T_{LO}$. For instance, the H gain factors $G_h$, with $h$ from 0 to H-1, follow the equation:

$$G_h = \frac{\sin\left(\frac{2\pi . F_c}{N . F_{LO}}(1+h)\right)}{\sin\left(\frac{2\pi . F_c}{N . F_{LO}}\right)} \qquad (1)$$

This results in a transfer function of the system 200 that exhibits a bandpass behavior centered around the frequency channel corresponding to the frequency $F_c$ of the sinewave.

Conversely, in some embodiments, the sampled pattern corresponds to the sampling of a sum of sinewaves. This results in a transfer function of the system 200 that exhibits, for each sinewave, a bandpass behavior centered around the frequency channel corresponding to the frequency of the sinewave. For instance, the H gain factors $G_h$, with $h$ from 0 to H-1, follow the equation:

$$G_h = \sum_{n=1}^{N_c} G_{h,cn} \qquad (2)$$

with:

$$G_{h,cn} = \frac{\sin\left(\frac{2\pi.F_{cn}}{N.F_{LO}}(1+h)\right)}{\sin\left(\frac{2\pi.F_{cn}}{N.F_{LO}}\right)} \qquad (3)$$

where $N_c$ is the number of sinewaves and where $F_{cn}$ is the frequency of the n-th sinewave. The aggregation of the frequency channels corresponding to the frequencies of the $N_c$ sinewaves is thus obtained.

In order to illustrate the theoretical transfer function that can be expected for the system 200, let consider for the sake of simplicity the particular case where H is equal to N. In such case, the modulus of the transfer function $H(f)$ can be expressed as:

$$|X(f).Y(f)*Z(f)| \qquad (4)$$

where:

$$X(f) = sinc(\pi.T_s.f) \qquad (5)$$

with $T_s = 1/F_s$ equal to $T_{LO}/N$. And where:

$$Y(f) = \sum_{cn=1}^{Nc} \sum_{n=-\infty}^{+\infty} \delta(f - n.N.F_{LO} \pm F_{cn}) \qquad (6)$$

and

$$Z(f) = sinc(\pi.T_{LO}.f) \qquad (7)$$

For instance, **Figure 3** illustrates the modulus of the transfer function $H(f)$ obtained for two sinewaves with frequencies $F_{c1}$ and $F_{c2}$. More particularly:

- the curve 301 corresponds to the modulus of $X(f)$;
- the curve 302 corresponds to the modulus of $X(f).Y(f)$;
- the curve 303 corresponds to the modulus of $X(f).Y(f)*Z(f)$.

We observe that the overall transfer function exhibits a bandpass filtering effect around the two frequencies $F_{c1}$ and $F_{c2}$. The system 200 according to this example can thus be used for the selection (or aggregation) of two frequency channels centered around the two frequencies $F_{c1}$ and $F_{c2}$.

**Figure 3a** illustrates the modulus of the transfer function $H(f)$ simulated in Cadence environment with Spectre simulator tool for the system 200 with N=32 and $1/T_{LO} = 62.5$MHz, thus allowing to address the RF band of interest of 1GHz, when implemented in a CMOS technology. The load capacitors are chosen as 50pF. The gain factors are computed as the sampling of two sinewaves centered around the two frequencies $F_{c1} = 106.25$MHz and $F_{c2} = 450$MHz. As can be seen on the resulting curve, the present technic allows achieving a transfer function that exhibits a filtering effect around the two frequencies $F_{c1}$ and $F_{c2}$ thus allowing the selection (or aggregation) of the two corresponding frequency channels.

It is noted that the gain factors $G_h$ also allow tuning the bandwidth BW of the transfer function of the system 200 around the frequency channel(s) to select. Indeed, such bandwidth BW is given by the formula BW = $1/T_{LO}$ when the gain factors correspond to the values given by equations (2) and (3), i.e. to the sampling of one (or more) sinewave corresponding to the frequency channel(s) to select. Such bandwidth equal to $1/T_{LO}$ is the narrowest possible channel bandwidth (this situation corresponds to the case illustrated in Figure 3 or in Figure 3a discussed above). However, wider bandwidths can be achieved for each frequency channel by adjusting the gain factors $G_h$. For instance, instead of having gain factors that correspond, for each frequency channel, to the sampling of a sinewave, the sampling of a tapered sinewave can be used. Such tapering indeed widens the bandwidth of the main lobe in the transfer function.

Referring now to **Figure 4,** we describe the implementation of the output stage 221 according to one embodiment of the present disclosure.

More particularly, in the embodiment of Figure 2, at each sampling clocks period $T_{LO}$, the capacitor $C_1$ or $C_2$ or ... or $C_N$ is charged during a $T_{LO}$ time interval and then discharged, ready for the next cycle of charge and discharge during the next $T_{LO}$ time interval. The voltage at the capacitor $C_1$ or $C_2$ or ... or $C_N$ is then refreshed at each sampling clocks period $T_{LO}$. However, due to the reset occurring during the same $T_{LO}$ period than the charging of the respective capacitor $C_1$ or $C_2$ or ... or $C_N$, there may be a loss in the current that is necessarily not integrated into said capacitor $C_1$ or $C_2$ or ... or $C_N$ during the reset duration.

In order to overcome such limitation, according to the embodiment of Figure 4 the i-th path, i from 1 to N, comprises an output stage 221 comprising:

- a first capacitor $C_{ia}$ and a second capacitor $C_{ib}$;
- a first reset switch configured to ground the first capacitor $C_{ia}$ for resetting the voltage across the first capacitor when the first reset switch is ON; and
- a second reset switch configured to ground the second capacitor $C_{ib}$ for resetting the voltage across the second capacitor when the second reset switch is ON.

Each path comprises a multiplexer 400 configured for alternating between a first state and a second state, the change between the first state and the second state occurring at each sampling clock period $T_{LO}$. A considered path is configured for:

- when the multiplexer 400 is in the first state: having the currents provided by the H branches to a given capacitor among the first capacitor $C_{ia}$ and the second capacitor $C_{ib}$, while the voltage across the other one of the first capacitor $C_{ia}$ and the second capacitor $C_{ib}$ is reset by the respective reset switch; and
- when the multiplexer 400 is in the second state: having the currents provided by the H branches to the other one of the first capacitor $C_{ia}$ and the second capacitor $C_{ib}$ while the voltage across the given capacitor among the first capacitor $C_{ia}$ and the second capacitor $C_{ib}$ is reset by the respective reset switch.

Thus, a given capacitor $C_{ia}$ or $C_{ib}$ is charged during a sampling clock period $T_{LO}$ and then discharged during the next sampling clock period $T_{LO}$. This decorrelation between charge and discharge relaxes the requirements in terms of timings. For instance, this avoids potential glitches in the clocks, as well as the loss of current that is necessarily not integrated into the capacitor during the reset duration when such reset occurs during the same sampling clock period $T_{LO}$ than the charging of the capacitor as discussed above in relation with Figure 2.

In the embodiment of Figure 4, each path comprises another multiplexer to multiplex the voltages across the first capacitor $C_{ia}$ and the second capacitor $C_{ib}$ to an output of output stage 221. In other words, the ungrounded terminal of the capacitor that receives the currents provided by the H branches is connected to the output of the output stage 221. However, in other embodiments, alternative ways of using the voltages across the first capacitor $C_{ia}$ and the second capacitor $C_{ib}$ can be considered, e.g. through their respective processing by a dedicated processing path.

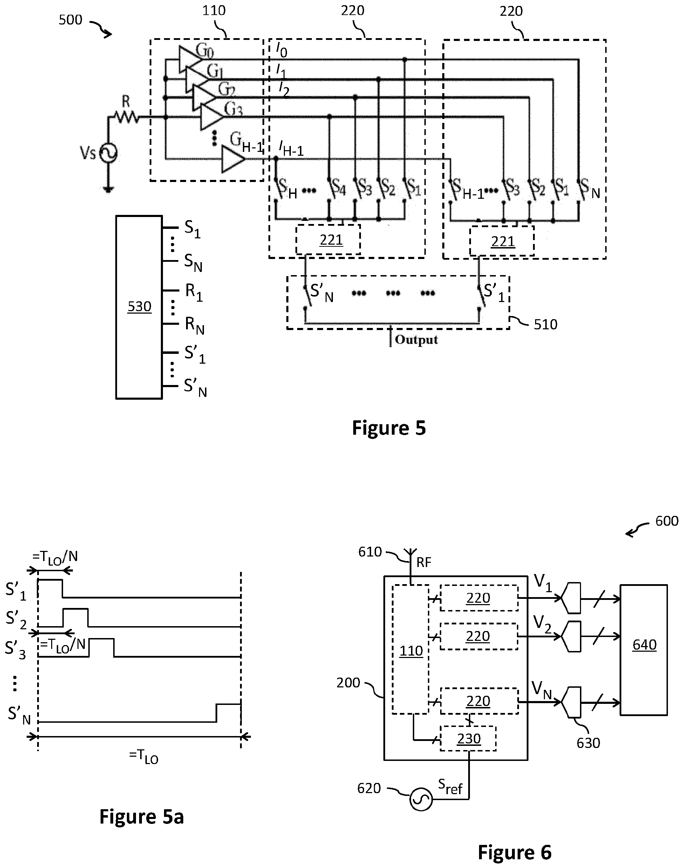

Referring now to **Figure 5** and **Figure 5a,** we describe a system 500 for the selection of at least one frequency channel in an input signal according to one embodiment of the present disclosure.

More particularly, compared to the system 200 of Figure 2, the system 500 comprises a reconstruction block 510 comprising, for each path, a switch, hereafter output switch, configured to connect the output of the output stage 221 to an output of the reconstruction block 510.

The clock system 530 delivers, in addition to the N sampling non-overlapping clocks, $S_1$, $S_2$, ..., $S_N$, and to the N reset periodic clocks $R_1$, $R_2$, ..., $R_N$, N non-overlapping periodic clocks, hereafter reconstruction clocks $S'_1$, $S'_2$, ..., $S'_N$, shifted by a duration substantially equal to $T_{LO}/N$ in relation to each other, the period of the reconstruction clocks $S'_1$, $S'_2$, ..., $S'_N$ being $T_{LO}$, a duration of a ON state of the reconstruction clocks $S'_1$, $S'_2$, ..., $S'_N$ being substantially equal to $T_{LO}/N$.

As discussed above, the ON state of such clock corresponds to the state of the clock that turns ON the switch that is trigged by the clock in question. For instance, the ON state of a clock that trigs a NMOS type transistor is the high voltage level of the clock. Conversely, the ON state of a clock that trigs a PMOS type transistor is the low voltage level of the clock.

Each reconstruction clock $S'_1$ or $S'_2$ or ... or $S'_N$ trigs a respective output switch for having the voltage across the

respective load capacitor $C_1$ or $C_2$ or ... or $C_N$ provided to an output of the reconstruction block 510. The N output switches are trigged sequentially following a same ordering as the N sampled waveforms associated to the N paths when the sampled waveforms are ordered following the N successive time shifts of the sampling period $T_{LO}$/N.

Thus, in addition to the behavior of the system 200 that translates in frequency the spectrum of the input signal by an amount equal to $F_{LO}$=1/$T_{LO}$, the signal delivered at the output of the reconstruction bloc 510 is translated back in frequency around the same center frequency as the input signal. The system 500 thus behaves as a HR-NPF, but with the flexibility in the shape for the transfer function of the system as described above in relation with Figure 2 and Figure 2a.

In some embodiments of the system 200 or of the system 500, the number H of branches is equal to the number N of paths.

In some embodiments, the reconstruction clocks $S'_1$, $S'_2$, ..., $S'_N$ and the sampling clocks $S_1$, $S_2$, ..., $S_N$ are same clocks. Thus, the implementation of the system 200 or 500 is simpler.

Referring now to **Figure 6,** we describe a receiver comprising the system 200 for the selection of at least one frequency channel according to one embodiment of the present disclosure.

More particularly, such a receiver 600 comprises a frequency synthesizer 620 delivering a reference signal at frequency $F_{LO}$=1/$T_{LO}$ to the clock system 230. The clock system 230 thus generates the N sampling clocks $S_1$, $S_2$, ..., $S_N$ and the N reset clocks $R_1$, $R_2$, ..., $R_N$ to be delivered to the N processing paths 220 based on the reference signal.

Each processing path 220 delivers the voltage present at the output of the output stage 221 (i.e. the voltage across the ungrounded terminal of its load capacitor(s) $C_1$ or $C_2$ or ... or $C_N$ as discussed above in relation with Figure 2, or $C_{ia}$, $C_{ib}$ as discussed above in relation with Figure 4) to a respective analog-to-digital converter, ADC, 630 delivering a respective sequence of samples. Such sequence of samples is thus a filtered and translated in frequency version of the input signal delivered by the receiving antenna 610 according to the processing detailed above. The N sequences of samples are further provided to a digital processing block 640 that demodulates the signal(s) present in the one (or more) frequency channel(s) selected by the system 200.

According to the architecture illustrated in Figure 6, the receiver 600 comprises a system 200 according to any of the embodiments discussed above. However, equivalent receiver 600 architectures can be considered based on the use of a system 500 according to any of the embodiments discussed above.

In some embodiments, such receiver 600 (whether comprising a system 200 or a system 500) is implemented in an integrated circuit. Such integrated circuit is based e.g. on a CMOS or a bipolar technology.

**Claims**

1. System (200, 500) for the selection of at least one frequency channel in an input signal, the system comprising:

   - a gain block (110) delivering H currents substantially proportional to said input signal through a respective gain factor, H an integer greater than or equal to three;
   - N processing paths (220), N an integer greater than or equal to H, for processing said currents; and
   - a clock system (230, 530) delivering N non-overlapping periodic clocks, hereafter sampling clocks, shifted by a duration substantially equal to $T_{LO}$/N in relation to each other, with $T_{LO}$ the period of the sampling clocks, a ON state of the sampling clocks being substantially equal to $T_{LO}$/N,

   wherein each path comprises:

   - an output stage (221) comprising at least one capacitor; and
   - H branches, each branch being configured for providing to the at least one capacitor, through a respective switch triggered by a respective sampling clock among said N sampling clocks, a respective current among said H currents, the H branches being configured for having the gain factors of the currents successively provided to the at least one capacitor over a period $T_{LO}$ that are representative of a respective sampled waveform, wherein the N respective sampled waveforms associated to the N paths are H first samples of the N circular permutations of a sampled pattern obtained by N successive time shifts of a sampling period $T_{LO}$/N, **characterized in that** the output stage comprises at least one switch, hereafter reset switch, implemented in parallel of said at least one capacitor, and **in that** said clock system delivers N clocks, hereafter reset clocks, each reset clock trigging a respective at least one reset switch for resetting the voltage across said at least one capacitor once per period $T_{LO}$.

2. System according to claim 1, wherein the sampled pattern corresponds to the sampling of a sinewave, a frequency of the sinewave being different from 1/$T_{LO}$, said at least one frequency channel comprising a frequency channel centered on the frequency of the sinewave.

3. System according to claim 1, wherein the sampled pattern corresponds to the sampling of a sum of sinewaves, said at least one frequency channel comprising, for each sinewave, a frequency channel centered on the frequency of the sinewave.

4. System according to any of the claims 1 to 3, wherein said at least one capacitor comprises a first capacitor and a second capacitor,

   wherein said at least one reset switch comprises:

   - a first reset switch configured to ground the first capacitor for resetting the voltage across the first capacitor when the first reset switch is ON, and
   - a second reset switch configured to ground the second capacitor for resetting the voltage across the second capacitor when the second reset switch is ON,

   wherein the output stage comprises at least one multiplexer (400) configured for alternating between a first state and a second state, the change between the first state and the second state occurring at each sampling clock period $T_{LO}$,
   wherein the output stage is configured for:

   - when the at least one multiplexer is in the first state: having the currents provided by the H branches to a given capacitor among the first and second capacitors, while the voltage across the other one of the first and second capacitors is reset by a respective reset switch; and
   - when the at least one multiplexer is in the second state: having the currents provided by the H branches to the other one of the first and second capacitors while the voltage across the given capacitor among the first and second capacitors is reset by the respective reset switch.

5. System according to claim 4, wherein said at least one multiplexer comprises a first multiplexer and a second multiplexer,
   wherein the output stage is configured for:

   - when the first multiplexer and the second multiplexer are in the first state: having the currents provided by the H branches to a given capacitor among the first and second capacitors, while the voltage across the other one of the first and second capacitors is reset by a respective reset switch, an ungrounded terminal of the given capacitor being connected to an output of the output stage; and
   - when the first multiplexer is in the second state: having the currents provided by the H branches to the other one of the first and second capacitors while the voltage across the given capacitor among the first and second capacitors is reset by the respective reset switch, an ungrounded terminal of the other one of the first and second capacitors being connected to the output of the output stage.

6. System (500) according to any of the claims 1 to 3 or according to claim 5, comprising a reconstruction block (510) comprising, for each path, a switch, hereafter output switch, configured to connect the output of the output stage to an output of the reconstruction block,

   wherein the clock system (530) delivers N non-overlapping periodic clocks, hereafter reconstruction clocks, shifted by a duration substantially equal to $T_{LO}/N$ in relation to each other, the period of the reconstruction clocks being $T_{LO}$, a duration of a ON state of the reconstruction clocks being substantially equal to $T_{LO}/N$,
   and wherein each reconstruction clock trigs a respective output switch for having the output of the output stage provided to an output of the reconstruction block,
   the N output switches being trigged sequentially following a same ordering as the N sampled waveforms associated to the N paths when the sampled waveforms are ordered following the N successive time shifts of the sampling period $T_{LO}/N$.

7. System according to claim 6, wherein the reconstruction clocks and the sampling clocks are same clocks.

8. Receiver (600) comprising a system (200, 500) for the selection of at least one frequency channel according to any of the claims 1 to 7.

9. Integrated circuit comprising a receiver according to claim 8.

**Figure 1**

**Figure 1a**

**Figure 2**

**Figure 2a**

**Figure 3**

**Figure 3a**

**Figure 4**

**Figure 5**

**Figure 5a**

**Figure 6**

# EP 4 507 204 A1

**Europäisches Patentamt**
**European Patent Office**
**Office européen des brevets**

# EUROPEAN SEARCH REPORT

**Application Number**

EP 23 30 6368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | AL SHAKOUSH A ET AL: "Low Complexity Architecture of N-Path Mixers for Low Power Application", 2019 17TH IEEE INTERNATIONAL NEW CIRCUITS AND SYSTEMS CONFERENCE (NEWCAS), IEEE, 23 June 2019 (2019-06-23), pages 1-4, XP033692491, DOI: 10.1109/NEWCAS44328.2019.8961234 [retrieved on 2020-01-16] * the whole document * | 1-4,8,9 | INV. H04B1/00 |
| Y | FR 3 125 934 A1 (UNIV GRENOBLE ALPES [FR]; INST POLYTECHNIQUE GRENOBLE [FR] ET AL.) 3 February 2023 (2023-02-03) * abstract; figures 1-4,8,13,16,19,23,25,27 * * paragraph [0001] – paragraph [0018] * * paragraph [0053] – paragraph [0104] * | 1-4,8,9 | |
| Y | US 2017/012676 A1 (COUROUVE PIERRE [FR] ET AL) 12 January 2017 (2017-01-12) * abstract; figures 2,3 * * paragraph [0009] – paragraph [0037] * * paragraph [0060] – paragraph [0087] * | 1-4,8,9 | |
| Y | US 2012/071122 A1 (AKITA IPPEI [JP]) 22 March 2012 (2012-03-22) * abstract; figures 1,2,6,8-12,16 * * paragraph [0022] – paragraph [0124] * * paragraph [0150] * | 1-4,8,9 | TECHNICAL FIELDS SEARCHED (IPC) H04B |
| Y | US 2010/316174 A1 (LEE JUNG HO [KR] ET AL) 16 December 2010 (2010-12-16) * abstract; figures 1-3,7,9 * * paragraph [0002] – paragraph [0027] * * paragraph [0047] – paragraph [0079] * | 1-4,8,9 | |

The present search report has been drawn up for all claims

| Place of search | Date of completion of the search | Examiner |
|---|---|---|
| Munich | 15 January 2024 | Galli, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 23 30 6368

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2024

| Patent document cited in search report | | Publication date | Patent family member(s) | | Publication date |
|---|---|---|---|---|---|
| FR 3125934 | A1 | 03-02-2023 | FR | 3125934 A1 | 03-02-2023 |
| | | | WO | 2023012432 A1 | 09-02-2023 |
| US 2017012676 | A1 | 12-01-2017 | EP | 3116182 A1 | 11-01-2017 |
| | | | FR | 3038808 A1 | 13-01-2017 |
| | | | US | 2017012676 A1 | 12-01-2017 |
| US 2012071122 | A1 | 22-03-2012 | JP | 5101678 B2 | 19-12-2012 |
| | | | JP | 2012065167 A | 29-03-2012 |
| | | | US | 2012071122 A1 | 22-03-2012 |
| US 2010316174 | A1 | 16-12-2010 | KR | 20100133748 A | 22-12-2010 |
| | | | US | 2010316174 A1 | 16-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AL SHAKOUSH, A.** ; **LAUGA-LARROZE** ; **ESTELLE** ; **SUBIAS, S.** ; **TARIS, T.** ; **PODEVIN** ; **FLORENCE** ; **BOURDEL, S**. Low Complexity Architecture of N-Path Mixers for Low Power Application. *17th IEEE International New Circuits and Systems Conference (NEWCAS*, 2019